# EUROPEAN PATENT SPECIFICATION

(11) **EP 0 681 729 B1**
(45) Date of publication and mention of the grant of the patent: **08.09.1999**
(21) Application number: 94906394.5
(22) Date of filing: 28.01.1994
(51) Int. Cl.: G10L 5/06, G10L 7/08, G10L 9/06

(54) **SPEECH SYNTHESIS AND RECOGNITION SYSTEM**
SYSTEM ZUR SPRACHSYNTHESE UND SPRACHERKENNUNG
SYSTEME DE SYNTHESE ET DE RECONNAISSANCE DE LA PAROLE

(30) Priority: 30.01.1993 KR 1209593
(43) Date of publication of application: 15.11.1995
(73) Proprietor: KOREA TELECOMMUNICATIONS AUTHORITY, Seoul 110-050 (KR)
(72) Inventor: LEE, Chong Rak, Kangnam -gu, Seoul (KR)
(74) Representative: Needle, Jacqueline
(86) International application number: KR9400007
(87) International publication number: WO9417519

(56) References cited:
- EP-A- 0 475 759
- EP-A- 0 504 927
- US-A- 5 131 043

## Description

### TECHNICAL FIELD

The present invention relates to a speech synthesis and recognition system for converting character information into speech signal and speech signal into character information, and more particularly to a speech synthesis and recognition system that reduces the amount of memory for storing standard voice information, and improves the quality of synthesized speech and the rate of speech recognition.

### BACKGROUND ART

The conventional text-to-speech synthesis system uses a synthesis-by-concatenation method, a formant synthesis method, an articulatory model method, etc., in order to convert an unrestricted vocabulary into voice signals.

The synthesis-by-concatenation method codes short speech segments obtained by dividing human voice into speech units such as syllable or phoneme, and stores the coded speech segment into a memory. The synthesis-by-concatenation method converts a character train fed by a user into phonetic symbols and reads out speech segments corresponding to the converted phonetic symbols, thereby generating a synthesized speech.

The formant synthesis method has a memory that stores data on frequencies of formants obtained from speech segments corresponding to the synthesis unit. The fornant synthesis method produces a formant variation function corresponding to a phonetic symbol train using the data and drives a formant synthesis filter having an arbitrarily variable frequency according to the formant variation function, thereby generating a synthesized speech.

Also, the articulatory model method models a vocal tract with a numeric expression, and produces a speech signal generated in pronouncing the phonetic symbol string by calculating the modelled vocal tract.

The speech units (i.e., synthesis units) synthesized by the aforementioned conventional speech synthesis methods can be syllable, phoneme, diphoneme, etc. Since the character information to be converted into speech signal is composed of letters, which are finally converted into phonemes, the most natural and convenient unit for indicating the speech is phoneme. In the case of using a phoneme as a synthesis unit, the number of phonemes varies according to the corresponding language, but is only approximately 20 to 40, so that the speech synthesis system provides an advantage of requiring a very small amount of memory, but provides a disadvantage of deteriorating the quality of speech since a co-articulation phenomenon where the phonetic value of phoneme is changed under the influence of pre- and post-phonemes is not reflected. The speech synthesis system using the phoneme as a synthesis unit is rarely used due to the deterioration of speech quality.

The speech synthesis system using a syllable as a synthesis unit reflects the coarticulation between phonemes within a syllable and provides a better qualified speech than the speech synthesis system using a phoneme as a synthesis unit. Meanwhile, in most languages, since the number of syllables is 100 times the number of phonemes, the speech synthesis system using the phoneme synthesis unit has a disadvantage of requiring a larger amount of memory capacity than the speech synthesis system using the phoneme synthesis unit.

To solve the problem of the speech synthesis system using the phoneme synthesis unit, a speech synthesis system using a diphoneme synthesis unit is suggested. The diphoneme speech synthesis system uses as a basic synthesis unit a transition part between two adjacent phonemes obtained by a division at the center of phoneme, having no influence from pre- and post-phoneme, among continuous speeches. In the case of using a diphoneme synthesis unit, the speech synthesis system generates a speech with a relatively good quality, even though it is in a lower quality than a speech produced by the speech synthesis system using the syllable synthesis unit. The diphoneme speech synthesis system provides an advantage of using a memory having a further smaller amount than the speech synthesis system using the syllable synthesis unit. However, since the diphoneme is represented as a combination of adjacent two phonemes, the diphoneme speech synthesis system consumes a greater amount of memory capacity than the speech synthesis system using the phoneme synthesis unit.

Meanwhile, the speech recognition system for converting speech into a character train uses a speech recognition method called pattern matching or pattern classification. The speech recognition method extracts characteristic parameter of speech signal and compares the extracted characteristic parameters with reference characteristic parameters extracted from reference speech signals, thereby selecting the most similar speech. The speech recognition method then generates a character train for the selected speech. Also, as the speech recognition method, there are the hidden Markov model (hereinafter referred to as "HMM"), dynamic time warping (hereinafter referred to as "DTW), and artificial neural network (hereinafter referred to as "ANN") methods.

Like the speech synthesis systems, the speech recognition systems have problems of consuming a large amount of memory capacity with a very low rate of recognition due to the use of a diphoneme, syllable or phoneme recognition unit. Actually, the speech recognition system using the diphoneme recognition unit has a disadvantage of having a lower rate of recognition and an advantage of consuming a lower amount of memory capacity than the speech recognition system using the syllable recognition unit. Also , the speech recognition system using the diphoneme recognition unit has a higher rate of recognition than the speech recognition system using the phoneme recognition unit, but requires a relatively greater amount of memory capacity than the phoneme-type speech recognition system. The prior art is disclosed e.g. in EP-A-504 927, dealing with phoneme segments.

### DISCLOSURE OF THE INVENTION

Accordingly, it is an object of the present invention to provide an improved speech synthesis and recognition system that would improve the quality of synthesis speech and the rate of speech recognition while reducing the amount of memory capacity required.

To achieve the object, the improved speech synthesis method of the present invention use a demiphoneme as a basic speech unit for synthesising speech, said demiphonemes being formed by bisecting a phoneme with respect to a stable interval of the phoneme being not affected with a preceeding phoneme and a following phoneme.

To achieve the object, the improved speech recognition method of the present invention use recognizing pattern data extracted from demiphonemes as a basic recognition unit for recognizing speech, said demiphonemes being formed by bisecting a phoneme with respect to a stable interval of the phoneme being not affected with a preceeding and following phonemes. According to another aspect of the invention, a speech synthesis system as described in claim 3 is provided. According to a further aspect of the invention, a speech recognition system as described in claim 13 is provided.

### BRIEF DESCRIPTION OF THE DRAWINGS

The above-mentioned object and other advantages of the present invention will become more apparent by describing the preferred embodiment of the present invention with reference to the attached drawings, in which:
FIG.1A shows a format of speech data on 1 word of an embodiment;
FIG,1B shows a format of syllable data on speech data of FIG,1A;
FIG,1C shows a format of phoneme data on speech data of FIG,1A;
FIG,1D shows a format of diphoneme data on speech data of FIG,1A;
FIG,1E shows a format of demiphoneme data on speech data of FIG,1A;
FIG.2 shows a block diagram of a speech synthesis system according to an embodiment of the present invention;
FIG.3 is a detailed block diagram of a speech segment combination unit shown in FIG.2;
FIG.4 is a detailed block diagram of a speech unit selection section shown in FIG.3;
FIG.5 is a demiphoneme table according to the context stored in a first memory shown in FIG.4;
FIG.6 is a block diagram of a speech recognition system according to an embodiment of the present invention; and
FIG.7 is a detailed block diagram of a recognition unit shown in FIG.6.

### BEST MODE FOR CARRYING OUT OF THE INVENTION

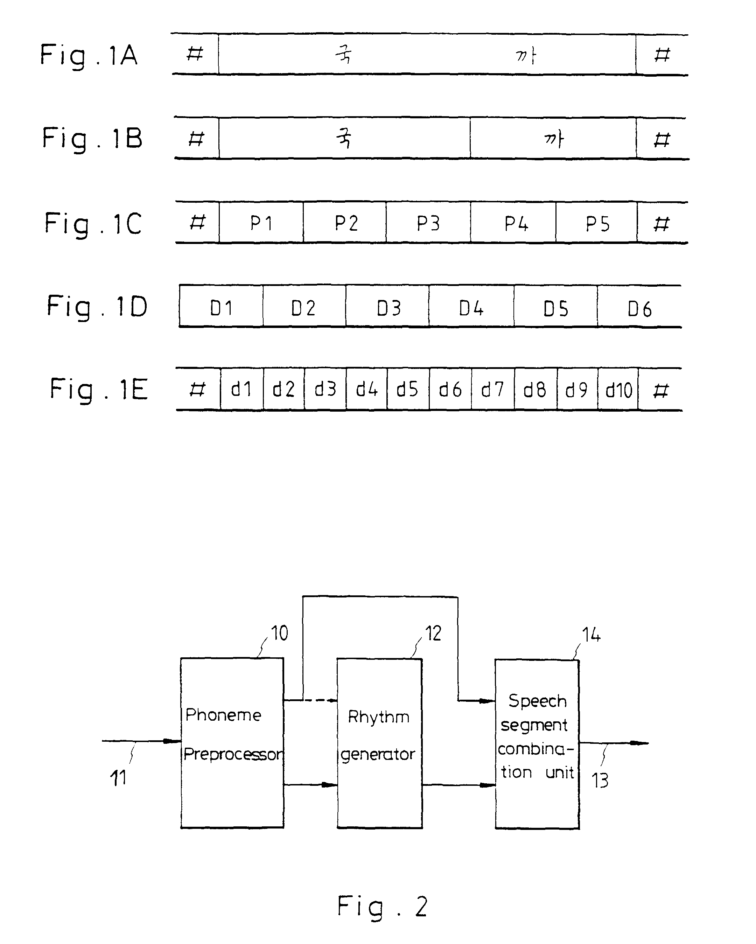

First of all, with reference to FIGS.1A to 1E, the format of demiphoneme data to be used in the speech synthesis and recognition system of the present invention is described, compared to the conventional format of syllable, phoneme and diphoneme data.

In FIG,1A, speech data 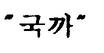 of the word 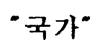 is illustrated. As shown in FIG,1B, the word 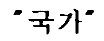 is composed of two syllable data 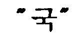 and 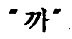 . In FIG.1C, the word 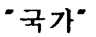 is composed of five phoneme data P1 to P5, which respectively have syllables of 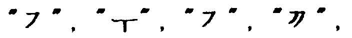 and 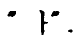 In FIGs.1A to 1C, "#" represents an idle state.

In FIG.1D, the format of data where the speech data 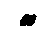 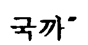 of the word 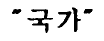 is divided in units of diphoneme is illustrated. The speech data is composed of first to sixth diphoneme data, D1 to D6. In the basic concept of the diphoneme, since the value of each phoneme varies under the influence of before-and-after adjacent phoneme, the transition part between the two adjacent phonemes is used as a basic unit, and an arbitrary continuous speech is generated by concatenating the basic units. Accordingly, a border of diphoneme data is identical to the central point of each phoneme, but in more specifically, a steady state instance being not under the influence of the adjacent two phonemes is a border of diphoneme data.

Turning now to FIG,1E, the format of demiphoneme to be used by the speech synthesis and recognition system of the present invention is illustrated. The formation of demiphoneme data has from first to tenth demiphoneme data. In comparing FIGS.1C and 1F, the demiphoneme data is generated by dividing the phoneme data into two parts with respect to the steady state instance of phoneme data, i.e., a central part. Among the bisected demiphoneme data d1 to d10, the left-sided demiphonemes d1, d3, d5, d7 and d9 are called initial demiphonemes, and the right-sided demiphonemes d2, d4, d6, d8 and d10 are called final demiphonemes. In comparing FIGS.1D and 1E, the borders of the first to tenth demiphoneme data, d1 to d10 are identical to the borders of the first to sixth diphoneme data, D1 to D6. Accordingly, initial demiphonemes and final demiphonemes can be properly combined to produce phoneme and diphoneme data. For instance, if the first and second demiphoneme data, d1 and d2, and the third and fourth demiphoneme data, d3 and d4 are combined respectively, the first and second phoneme data, P1 and P2 are generated. If the second and third demiphoneme data, d2 and d3, and the fourth and fifth demiphoneme data, d4 and d5 are combined respectively, the second and third diphoneme data, D2 and D3 are generated. As described above, since the demiphoneme data can be converted into phoneme data and diphoneme data, the speech synthesis and recognition system using the demiphoneme as a synthesis unit generates a synthesis speech signal of the high quality like the diphoneme speech synthesis and recognition system, while requiring a small amount of memory capacity like the phoneme speech synthesis and recognition system. In other words, to generate a synthesis speech signal with the same speech quality as the synthesis speech signal using the diphoneme synthesis unit, the speech synthesis system according to the present invention requires a greater amount of memory capacity than the phoneme speech synthesis system but a smaller amount than the diphoneme speech synthesis system. The reason of the decrement in memory is described as follows.

For convenience, assume that 30 types of phonemes are and phonemes to be laid before and after each phoneme existing. In this case, 900 (30x30) different types of the diphonemes exist. The existence of 900 diphonemes is caused by assuming that a phoneme has an influence only on the front part or rear part of adjacent phoneme and the influence is different with the different phonemes. However, in most cases, the influence on a phoneme by the adjacent phoneme is identical for phonemes with the same tuning position. Por instance, according to the tuning position of phonemes, the Korean phonemes are classified into 5 classes : labial, dental, palatal, velar, and glottal consonants. Also, there are front, central, and back vowels, and the central vowel and back vowel are classified into flat and rounded vowels, respectively. That is, there are five vowel classes. Accordingly, there are 300 (30x10) final demiphonemes, i.e., initial parts of diphonemes, and 300 (30x10) initial demiphonemes, i.e., final parts of diphonemes. Since the demiphoneme has almost half the length of diphoneme, its memory size corresponds to the 300 diphonemes. As a result, the amount of memory capacity of the speech synthesis and recognition system using the demiphoneme synthesis unit is 1/3 of the memory capacity of the speech synthesis and recognition system using the diphoneme synthesis unit.

When an improvement in the quality of a synthesis speech is required, the speech synthesis and recognition system using the demiphoneme synthesis unit is more desirable than the speech synthesis and recognition system using the diphoneme synthesis unit.

It is assumed that in the diphoneme speech synthesis system a phoneme is affected only by an adjacent phoneme, but it is affected by before-and-after several phonemes in actual cases. Accordingly, the quality of synthesis speech is compromised. To synthesize a natural speech such as a pronunciation of human by sufficiently reflecting the co-articulation, a so-called context-dependent unit in consideration of many peripheral phonemes of each phoneme should be used. In Korean language, if it is assumed that the effect of three preceding phonemes and three following phonemes for each phoneme is being considered, a huge number of different types of phonemes depending on the context exist. Meanwhile, most of the phonemes, particularly initial phonemes of final phoneme of vowel are affected only by respective preceding phonemes and following phonemes. The memory for storing the demiphonemes depending on the context corresponds to the memory needed for a much smaller number phonemes. Accordingly, to generate a very natural synthesis speech, the amount of memory capacity needed in the speech synthesis system using the demiphoneme synthesis unit can be reduced to as low as 1/100 of the amount needed in the conventional diphoneme speech synthesis system. Actually, since the condition of limiting the types of phonemes being available before and after each phoneme is applied, the needed memory amount is reduced to several thousand to be almost equal to the case of using diphoneme. In other words, if the memory capacity of the amount consumed in the diphoneme speech synthesis system is used, the speech synthesis system of the present invention can generate a very natural synthesis speech reflecting the coarticulation phenomenon.

Turning now to FIG.2, the speech synthesis system according to an embodiment of the present invention that has a phonetic preprocessor 10 for receiving a character data train from an input line 11 is illustrated. The phonetic preprocessor 10 analyzes a syntax of the character data train to generate a syntax analysis data, and applies a rhythm variation rule according to the syntax analysis data to generate a phonetic symbol data train for the character data train. The phonetic preprocessor 10 supplies the phonetic symbol data train and the syntax analysis data to a speech segment combination unit 14 and a rhythm generator 12, respectively. Alternatively, the phonetic preprocessor 10 can supply all of the phonetic symbol data train and the syntax analysis data to the rhythm generator 12. The phonetic symbol data train is composed of phonetic and allophonic symbols. The character data train is supplied to the phonetic preprocessor 10 via the input line 11 from the keyboard, computer or data base. Accordingly, the phonetic preprocessor 10 functions to convert the character data train into the phonetic symbol data train.

The rhythm generator 12 generates an intonation pattern data for an intonation of speech to be generated, a stress pattern data for a stress of speech to be generated, and a duration data of each phoneme, using the syntax analysis data. The intonation pattern data, the stress pattern data, and the duration data generated in the rhythm generator 12 are supplied to a speech segment combination unit 14. Alternatively, the rhythm generator 12 inserts the intonation pattern data, the stress pattern data, and the duration data into the phonetic symbol data train received via the dotted input line from the phonetic preprocessor 10, and supplies the phonetic symbol data train loaded with the three kinds of rhythm data into the speech segment combination unit 14.

Also, the speech segment combination unit 14 has a memory bank where demiphoneme data are stored, and reads out from the memory bank the demiphoneme data corresponding to the phonetic symbol data sequentially received from the phonetic preprocessor 10. The speech segment combination unit 14 adjusts the pitch, the energy (strength ), the duration of the read-out demiphoneme data by the intonation pattern data, the stress pattern data, and the duration data from the rhythm generator 12, thereby generating a synthesis speech signal with intonation, stress and pronunciation speed corresponding to the intonation pattern data, the stress pattern data, and the duration data. The synthesis speech signal generated by the speech segment combination unit 14 is supplied through the output line 13.

Alternatively, when the phonetic symbol data train with three kinds of rhythm data from the rhythm generator 12 is received, the speech segment combination unit 14 separates the phonetic symbol data train from the rhythm data. The speech segment combination unit 14 reads out from the memory the demiphoneme date train corresponding to the separated phonetic symbol data train and adjusts the pitch, the energy (strength), the duration of the read out of the demiphoneme data by the separated intonation pattern data, the separated stress pattern data, and the separated duration data, thereby generating a synthesis speech signal having intonation pattern data, the stress pattern data, and the duration data.

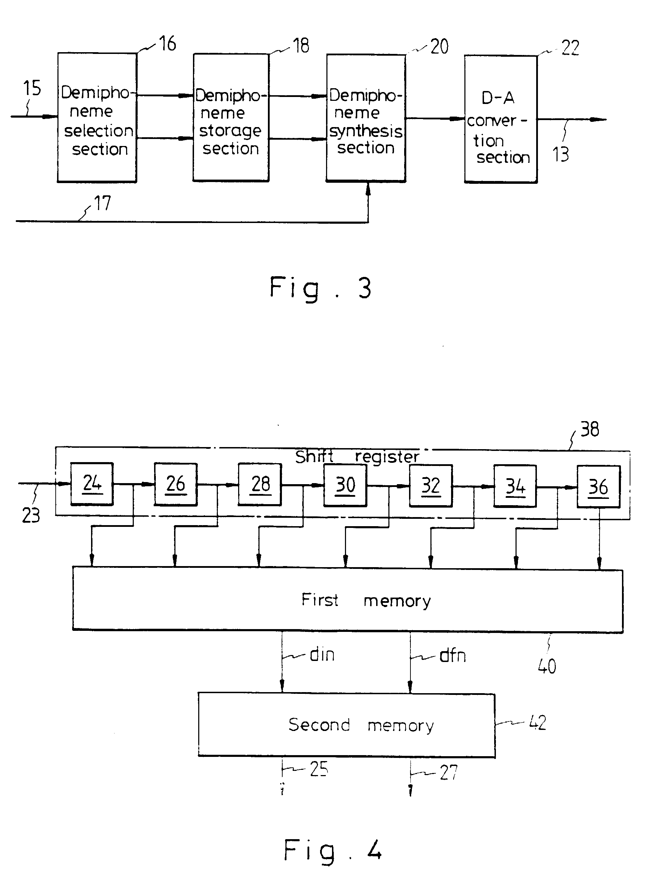

In FIG.3, the speech segment combination unit 14 shown in FIG.2 that has a demiphoneme selection section 16 for receiving a phonetic symbol data train from a first input line 15, and a demiphoneme synthesis section 20 for receiving an intonation pattern data, a stress pattern data, and a duration data from a second input line 17 is illustrated. The demiphoneme selection section 16 generates addresses of initial and final demiphonemes corresponding to a phonetic symbol data and supplies the demiphoneme addresses to the demiphoneme storage section 18.

The demiphoneme storage section 18 stores initial demiphoneme and final demiphoneme data constituting a phoneme. The demiphoneme storage section 18 reads out the initial demiphoneme and final demiphoneme data stored in its own storage region corresponding to the demiphoneme addresses from the demiphoneme selection section 16, and supplies the read-out initial and final demiphoneme data to the demiphoneme synthesis section 20. The demiphoneme data stored in the demiphoneme storage section 18 is formed by dividing speech samples actually pronounced by persons in the demiphoneme unit and coding the divided speech samples. In particular, the initial demiphoneme only includes transition components existing in the edge zone of the current phoneme adjacent to the proceeding phoneme. And the final demiphoneme only involves transition components existing in the edge zone of the current phoneme adjacent to the following phoneme. The demiphoneme addresses for the storage region of the demiphoneme storage section 18 with the stored initial demiphoneme and final demiphoneme data for the phoneme are stored in the memory bank (not shown) of demiphoneme selection section 16.

The demiphoneme synthesis section 20 is constructed in several types according to the coding method of the demiphoneme data. When the demiphoneme data is linearly-predicted-encoded, the demiphoneme synthesis section 20 linearly-predicted-decodes the initial demiphoneme data and final demiphoneme data received from the demiphoneme storage section 18, thereby generating a synthesis speech data. When the demiphoneme data is formant-encoded, the demiphoneme synthesis section 20 has a formant synthesis filter constituted to vary the formant frequency according to the demiphoneme data from the demiphoneme storage section 18 with the formant variation data. The formant synthesis filter controls the intensity and type of the basic speech signal and formant frequency depending on initial demiphoneme data and final demiphoneme data from the demiphoneme storage section 18, thereby generating a synthesis speech data. Also, when the demiphoneme data is articulation-modelled to have the information on the formation of vocal tract and the basic speech, the demiphoneme synthesis section 20 acoustically operates the vocal tract formation and the basic speech information included in the initial demiphoneme data and final demiphoneme data from the demiphoneme storage section 18, thereby generating a synthesis speech data. In the above three synthesis methods, the basic speech signal included is used in an interval that the synthesis speech is a voiceless sound, white noise. In an interval that the synthesis speech is a voice sound, the basic speech includes artificial glottal pulses or impulse train.

The demiphoneme combination section 20 adjusts the amplitude of the basic speech signal and the interval of pulse according to the stress pattern data and the intonation pattern data from the second input line 17, making the synthesis speech process the predetermined intonation and stress. The demiphoneme synthesis section 20 adjusts the temporal variation rate of vocal tract parameters determining the length of phoneme according to the duration data supplied from the second input line 17, thereby making the synthesis speech contain the predetermined pronunciation speed. Also, the demiphoneme synthesis section 20 makes the variation between vocal tract parameters of adjacent demiphoneme smooth using the interpolation method, thereby generating a smoothly concatenated synthesis speech. The synthesis speech data generated by the demiphoneme synthesis section 20 is supplied to a digital-to-analog (hereinafter referred to as "D-A") conversion section 22.

The D-A conversion section 22 converts the synthesis speech data from the demiphoneme synthesis section 20 into analog signal, thereby generating a synthesis speech signal in the form of analog signal. The D-A conversion section 22 low-pass-filters the synthesis speech signal to remove the noise signal of high frequency without the voice band included in the synthesis speech signal. Also, the D-A conversion section 22 amplifies the power of low-pass-filtered synthesis speech signal and supplies the power-amplified synthesis speech signal to the speech output unit such as a speaker via an output line 13. To do this, the D-A conversion section 22 has a D-A converter, a low pass filter, and an amplifier.

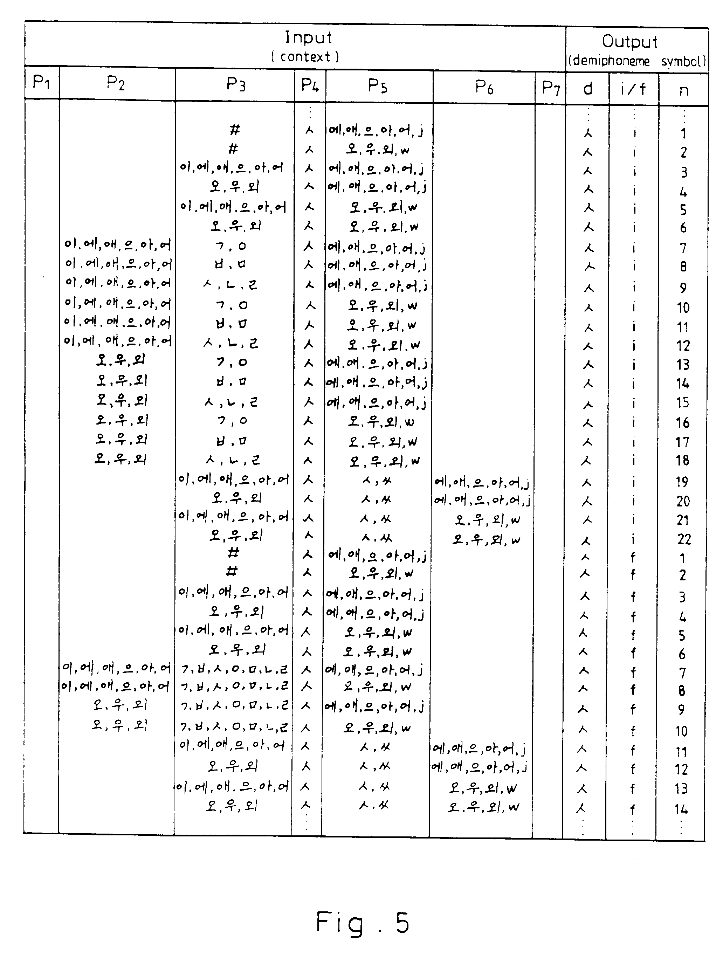

Turning now to FIG.4 , the demiphoneme selection section 16 of FIG.3 with a shift register 38 for receiving a phonetic symbol data from the input line 23, and a first memory 40 for receiving in parallel form a phonetic symbol data train from the shift register 38 is described in detail. The shift register 38 has seven phoneme buffers from 24 to 36 serially connected to the input line 23, to reflect the influence of three initial phonemes and three final phonemes. The seven phoneme buffers from 24 to 36 sequentially move the phonetic symbol data of the phoneme from the input line 23 in the right-sided direction, and the seven phoneme buffers from 24 to 38 supply their own phonetic symbol data, P1 to P7 to the first memory 40. That is, the fourth phoneme buffer 30 stores the phonetic symbol data P4 for the current phoneme, and the first to third phoneme buffers 24 to 28 store the respective phonetic symbol data, P1 to P3 for the three following phonemes. The fifth to seventh phoneme buffers 30 to 36 store the respective phonetic symbol data P5 to P7 for three preceding phonemes. The first memory 40, receiving the seven phonetic symbol data P1 to P7 from the first to seventh phoneme buffers, 24 to 36 constituting the shift register 38, reads out the initial demiphoneme symbol din and the final demiphoneme symbol dfn stored in the storage region of an address corresponding to the logic value of the seven phonetic symbol data P1 to P7, and generates the read-out initial demiphoneme and final demiphoneme symbols din and dfn. To do this, the first memory 40 has a demiphoneme table according to the context where initial demiphoneme and final demiphoneme symbols din and dfn are arranged according to the logic value of the phonetic symbol data P1 to P7 for seven phonemes, as shown in FIG.5. Accordingly, the initial demiphoneme and final demiphoneme symbols din and dfn from the first memory 40 are determined by the context according to a current phoneme, three preceding phonemes, and three following phonemes. In the demiphoneme table of FIG.5 according to the context, the first and seventh phonetic symbol data P1 and P7 act as "don't care".

For instance, when the character train 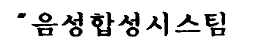 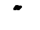 is to be speech-synthesized, the input line 23 receives the phonetic symbol data train for phonemes 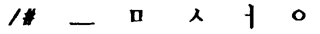 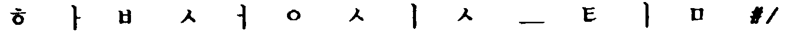 from the phonetic preprocessor 10 shown in FIG.2. The symbol /#/among the above phonetic symbol data indicates the idle state. The phonetic symbol data for next phoneme 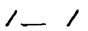 is moved to the seventh phoneme buffer 36 via the first phoneme buffer 24. However, the first memory 40 does not generate any demiphoneme symbols until five phonetic symbol data (i.e., 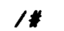 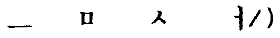 are received. Alternatively, when five phonetic symbol data (i.e., 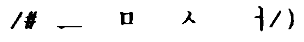 are received in the input line 23, the first memory 40 generates the initial demiphoneme and final demiphoneme symbols for the phonetic symbol data of 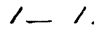 Similarly, to generate the initial demiphoneme and final demiphoneme symbols for the tenth phonetic symbol data 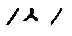 in the first memory 40, the thirteenth phonetic symbol data 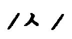 should be received in the first phoneme buffer 24. The detailed description is as follows.

If the thirteenth phonetic symbol data 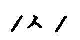 is fed into the input line 23, the phonetic symbol data 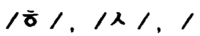 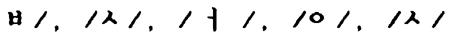 are respectively fed into the first to seventh phoneme buffer 24 to 36, and the phonetic symbol data 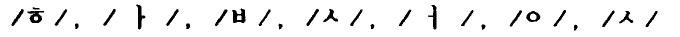 supplied into the first memory 40 at the same time. Here, the current phoneme is 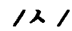 , and the three preceding phonemes are 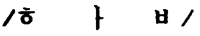 and the three following phonemes are 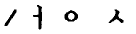 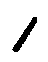 . The initial demiphoneme and final demiphoneme symbols, din and dfn supplied from the first memory 40 have 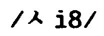 and 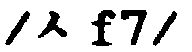 in the table shown in FIG.5.

Also, the demiphoneme selection section 16 additionally has a second memory 42 for receiving the initial demiphoneme and final demiphoneme symbols din and dfn from the first memory 40. The second memory 42 reads out the addresses of initial demiphoneme and final demiphoneme stored in the storage region of address corresponding to the logic value of the initial demiphoneme and final demiphoneme symbols din and dfn, and supplies the read-out address of initial demiphoneme and final demiphoneme to the demiphoneme storage section 18 shown in FIG.3.

The demiphoneme table according to the context, shown in FIG.5, can be formed by a speech segment clustering method or a method according to the phonetic theory. From real voices of persons the speech segment clustering method collects each phoneme for all of the cases of changing the preceding phoneme and following phoneme determined to be within the range of influence in consideration of phonotactic constraint, and then bisects the speech signal for each collected phoneme, thereby obtaining initial demiphoneme and final demiphoneme. The clustering method compares the initial demiphonemes or the final demiphonemes with themselves and clusters them according to their similarity, thereby making demiphoneme table according to the context. In this case, to cluster the respective similar demiphonemes, the initial demiphonemes and final demiphonemes are time-normalized and then are automatically or manually grouped using the similarity measure. Then, any one among several initial demiphonemes and final demiphonemes included in each group becomes a symbol of the initial demiphoneme or the final demiphoneme as a representation of the group. Since the clustering method should collect speech samples on phonemes for all of the cases of changing preceding phonemes and following phonemes within the maximum range of influence, it has a disadvantage of having a very large amount of speech samples to be collected. To greatly reduce the amount of speech samples to be collected, a method of reducing the number and the type of preceding phonemes and following phonemes is used as follows.

In the method of reducing the number and type of preceding phonemes and following phonemes, all of the combination of phonemes to be preceded and phonemes to be followed with respect to each phoneme are obtained. But only the combination of the nearest preceding vowel and idle phoneme, and a following vowel and idle phoneme with respect to the current phoneme are taken. And, the next-nearest phonemes are not included in context. For instance, in Korean language, when a current phoneme is a consonant, the context types can be only five things: (#)C(V), (V)C(#), (V)C(V), (VC)C(V), and (V)C(CV). That is, each of initial demiphonemes and final demiphonemes has five contexts. Here, the symbol within the parenthesis represents a context, C represents a consonant, V represents a vowel, and # represents an idle state. Glide is always treated as a vowel. When the current phoneme is a vowel, the initial phoneme is not affected by the final phoneme, and the final phoneme is not affected by the initial phoneme. Accordingly, in this case, the possible context form in the initial demiphonemes can be five things: #(V), (V)V, (#C )V , (VC)V, and (VCC)V, and the possible context form in the final demiphonemes can also be five things: V(#), V(V), V(C#), V(CV), and V(CCV). If the consonant adjacent to the current vowel is palatal, it is not affected by the phonemes outside the consonant.

Meanwhile, the method according to the phonetic theory makes the demiphoneme table according to the context by grouping the peripheral phonemes of an arbitrary current phoneme into phoneme types giving the same influence. The method according to the phonetic theory classifies vowels into five classes : front, central, back, rounded and flat vowels, and classifies consonants into five classes : labial, dental, palatal, velar and glottal consonants. However, this classification should be subdivided for phonemes adjacent to a demiphoneme of the current phoneme. That is, if the current phoneme is a vowel and a phoneme adjacent to demiphoneme of current phoneme is a vowel, the vowel should be classified into low or high vowel. If the current phoneme is a vowel and a phoneme adjacent to the current phoneme is a consonant, the vowel should be subdivided accordingly as the phoneme adjacent to the current phoneme is a lateral, a nasal, a plosive (or affrication), a frication(or an aspiration). If the current phoneme is a vowel, and a phoneme adjacent to demiphoneme of the current phoneme is a consonant, the subdivision should be done accordingly as the adjacent consonant is voiced plain, unvoiced plain, glottalized, or aspirated.

Also, if the current phoneme is a consonant, the consonant can be divided into four classes according to its components. In more detail, a nasal murmur is not affected by rounded and flat sounds, and a stop gap of plosive and affrication noise is not affected by adjacent phonemes. The frication noise /s/ and 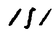 are not affected by front and back vowels. Also, an aspiration noise 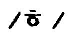 is not affected by low and high vowels. As an example of the method according to the phonetic theory, the step of obtaining demiphoneme by the context with respect to the Korean phoneme 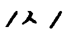 is described.

Since 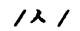 is a consonant phoneme, the initial demiphoneme and final demiphoneme of the consonant 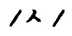 have 4 context patterns such as (V1)C(V), (#)C(V), (V1)C(#), (V1C1)C2(V2), and (V1)C(C2V2). The vowels available as V1 and V2 are 9 vowels : 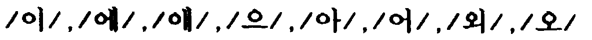 and 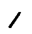 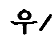 .The glide sounds usable at the position V2 may be rounded glide sounds such as /w/ and flat glide sounds such as /y/ and /j/ which glide sound of 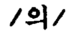 is. If a glide /y/ or a vowel 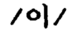 follows the consonant 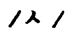 , the consonant 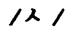 is always changed into 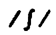 , so that the glide /y/ and the vowel 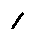 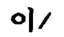 cannot be written just after the consonant 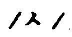 . However, according to the principle, the demiphoneme of the consonant 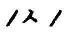 is affected only by the rounded vowel and flat vowel; the V1 can be classified into a group including 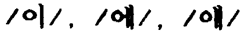 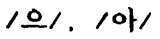 and 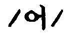 and another group including 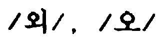 and 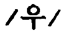 . Meanwhile, V2 is classified into a group including 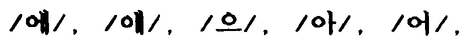 and 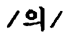 and another group including 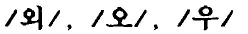 and /w/.

According to the phonotactic constraint in the Korean language, consonants positioned just before the consonant 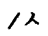 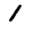 are seven types of: 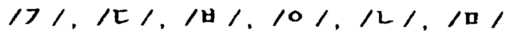 and 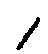 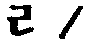 , and consonants just after the consonant 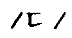 is assimilated to 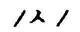 by the next consonant 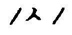 or 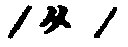 , so that C1 available at (V1C1)C2(V2) can be 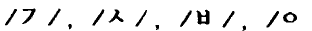 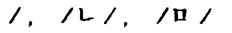 and 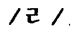 . Accordingly, C1 with respect to initial demiphoneme C2 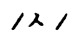 available at (V1C1)C2(V2) can be classified into three groups: a group of 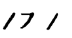 and 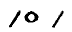 , a group of 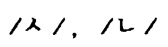 and 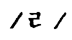 and a group of 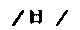 and 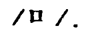 The C1 has no influence on the final demiphoneme of C2 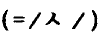 at (V1C1)C2(V2).

Similarly, according to the phonotactic constraint in the Korean language, the consonant 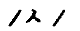 cannot used at the position C1, but can be used at C1 due to the assimilation phenomenon in which 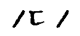 is assimilated into 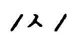 by following 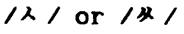 . In this case, C2 available at (V1)C1(C2V2) is 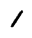 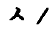 and 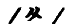 , which are in the same group because they have the same articulation position. The table of FIG.5 made by the method according to the theory shows 22 initial demiphonemes and 14 final demiphonemes according to the context of 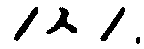

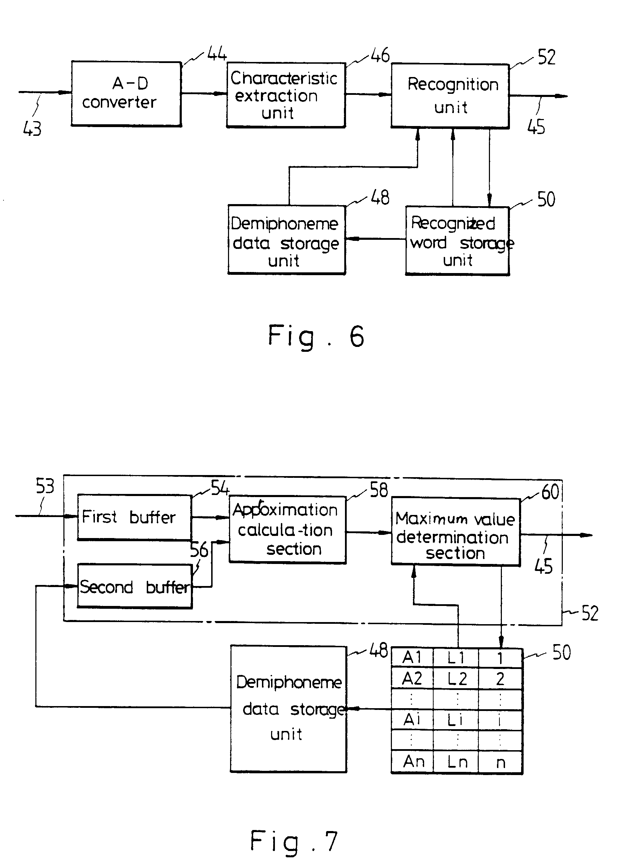

Turning now to FIG.6, the speech recognition system according to an embodiment of the present invention that has an analog-to-digital (hereinafter referred to as "A-D" ) converter 44 for receiving a speech signal from an input line 43, and a demiphoneme data storage unit 48 with the stored demiphoneme data is illustrated. The A-D converter 44 low-pass-filters the speech signal to remove the noise signal of high frequency component included in the speech signal supplied from the input line 43. The A-D converter 44 converts the filtered speech signal to the digital signal, and supplies the digital speech data to the characteristic extraction unit 46.

The characteristic extraction unit 46 processes the digital speech data supplied from the A-D converter 44, thereby generating a characteristic parameter train. The characteristic parameter generated in the characteristic extraction unit 46 includes a short-term energy, a differenced short-term energy, and an output energy of filter bank representing a speech spectrum. Also, the characteristic parameter includes a linear prediction coefficient, a reflection coefficient, a log area ratio, or a cepstrum coefficient instead of the output energy of filter bank. The demiphoneme data stored in the demiphoneme data storage unit 48 has characteristic parameters for demiphoneme reflecting the context by the demiphoneme selection section 16 such as Fig. 4, a weight value of artificial neural network model, or a state occupation distribution and a state transition distribution of the speech spectrum. The characteristic parameter constituting the demiphoneme data is encoded in original state, or are conventionally encoded by vector-quantizing.

And the state occupation probability and state transition probability of the speech spectrum forming the demiphoneme data are obtained in manufacture of the recognition system by steps of Markov-modeling each demiphoneme, extracting characteristic parameters representing the speech spectrums from a plurality of speech samples corresponding to each demiphoneme, and processing the characteristic parameters representing the speech spectrum in the statistics.

Also, the weight value of artificial neural network model forming the demiphoneme data is generated in manufacture of the recognition system by extracting characteristic parameters from the plurality of speech samples for demiphoneme and then learning the extracted characteristic parameters using a learning method of the artificial neural network.

The speech recognition system additionally has a recognition unit 52 for receiving an output data of the characteristic extraction unit 46, and a recognized word storage unit 50 for storing recognized words. The recognized word stored in the recognized word storage unit 50 has character data on character train of word, phrase and clause, and an address train for demiphoneme train representing the word, phrase, and clause. The demiphonemes contained in the demiphoneme train is reflecting the context. The demiphonemes train reflecting the context is obtained in manufacture of recognition system by providing the phonetic symbol data train corresponding to the character train to the demiphoneme selection unit 16 shown in Fig. 4. The recognized word storage unit 50 can be replaced with a ROM or a nonvolatile memory having stored new recognized words when the recognized words are changed or added.

The recognized word storage unit 50 reads out the character train data and the demiphoneme address train stored in storage region corresponding to the recognized word address, when a recognized word address is supplied from a recognition unit 52. The recognized word storage unit 50 supplies the read-out character train data to the recognition unit 52, and meanwhile, supplies the demiphoneme address train to the demiphoneme data storage unit 48. Then, the demiphoneme data storage unit 48 sequentially reads out the demiphoneme data stored in storage region corresponding to demiphoneme address sequentially supplied from the recognized word storage unit 50 and supplies the read-out reference demiphoneme data to the recognition unit 52.

To compare an output of characteristic extraction unit 46 with a demiphoneme data train for all of the recognized words stored in the recognized word storage unit 50 in the pattern matching method, the recognition unit 52 sequentially increases from the lowest logic value to the highest logic value the logic value of recognized word address to be supplied to the recognized word storage unit 50.

Whenever the logic value of the recognized word address is changed, the recognition unit 52 compares the output data of the characteristic extraction unit 46 with the demiphoneme data train sequentially supplied from the demiphoneme storage unit 48 in the pattern matching method, thereby producing an approximate value. Also, the recognition unit 52 compares its own previously stored approximate value with the current approximate value. If the current approximate value is larger than the previous approximate value, the recognition unit 52 stores the previous approximate value and character train instead of the current approximate value and the character train from the recognized word storage unit 50. Alternatively, if the current approximate value is larger than the previous approximate value, the recognition unit 52 stores the current approximate value and the character train from the recognized word storage unit 50, instead of the previous approximate value and characteristic train stored in the recognition unit 52.

Also, when the output data of the characteristic extraction unit 46 is compared with the demiphoneme data train for all of the recognized words stored in the recognized word storage unit 50, the recognition unit 52 supplies the finally remaining characteristic train as a result of speech recognition to an output unit (not shown) via the output line 45. The output unit may be a monitor or a printer.

Turning now to FIG.7, the recognition unit 52 shown in FIG.6 that has a first buffer 54 for receiving an output data of the characteristic extraction unit 46 shown in FIG.6 from the input line 54, and a second buffer 56 for receiving a demiphoneme data train from the demiphoneme data storage unit 48 is illustrated. The first buffer 54 stores the output data of the characteristic extraction unit 46 while all of the recognized words stored in the recognized word storage unit 50 is compared with the output data of the characteristic extraction unit 46. The second buffer 56 temporarily stores the demiphoneme data train from the demiphoneme data storage unit 48 during comparison of a demiphoneme data train with the output data of the characteristic extraction unit 46.

The recognition unit 52 additionally has an approximation calculation section 58 for receiving an output data of the characteristic extraction unit 46 and the demiphoneme data train from the first and second buffers, 54 and 56. The approximation calculation section 58 produces approximate values of the output data of the characteristic extraction unit 46 and the demiphoneme data train, and supplies the produced approximate value to the maximum value determination section 60. The maximum value determination section 60 compares the current approximate value supplied from the approximation calculation section 58 with its own previously stored approximate value. If the previous approximate value is larger than the current approximate value, the maximum value determination section 60 ignores the current approximate value and increases by "1" the logic value of the recognized word address to be supplied to the recognized word storage unit 50. Contrarily, if the current approximate value is larger than the previous approximate value, the maximum value determination section 60 stores the current approximate value and the character train supplied from the recognized word storage unit 50, instead of the previously stored approximate value and character train. When the recognized word address has the highest logic value, the maximum value determination section 60 supplies its own stored character train as a speech recognition result via the output line 45 to the output unit.

As described above, the speech synthesis system of the present invention provides an advantage of reducing the amount of memory capacity for storing unit speech for speech synthesis using as a synthesis unit a demiphoneme smaller than a syllable, a phoneme and a diphoneme. The speech synthesis system of the present invention reflects the context of phoneme to demiphoneme, thereby improving the quality of synthesis speech.

Also, the speech recognition system of the present invention uses a demiphoneme smaller than a syllable, a phoneme, and a diphoneme as a recognition unit data for comparison, thereby reducing the amount of memory for storing the recognition unit data for comparison. Moreover, the speech recognition system of the present invention reflects the context of phoneme to the demiphoneme data, thereby improving the speech recognition rate.

## Claims

1. A speech synthesis method using a demiphoneme as a basic speech unit for synthesising speech, said demiphonemes being formed by bisecting a phoneme with respect to a stable interval of the phoneme being not affected with a preceding phoneme and a following phoneme.

2. A speech synthesis method as claimed in claim 1, wherein said demiphonemes include transition components existing in an edge zone of the phoneme adjacent to the preceding phoneme or the following phoneme.

3. A speech synthesis system comprising:
phonetic preprocessor means (10) for generating syntax information data by analyzing syntax of character train data (11) on word, phrase, and clause, and converting said character train data into phonetic symbol data by a rhythm variation rule according to said syntax information data;
rhythm generation means (12) for generating an intonation pattern data for adjusting an intonation of speech, a stress pattern data for adjusting a stress of speech, and a duration data for adjusting a duration of phoneme, according to said syntax information data from said phonetic preprocessor means;
demiphoneme storage means (18) for storing initial demiphoneme and final demiphoneme data, said demiphoneme being generated by bisecting a phoneme with respect to a center of the phoneme and encoding the bisected demiphonemes;
and speech segment combination means (14) for reading out from said demiphoneme storage means (18) at least one initial demiphoneme and final demiphoneme data corresponding to said phonetic symbol data from said phonetic preprocessor means (10), synthesizing a phonetic signal by encoding said read-out initial demiphoneme and final demiphoneme data, and adjusting intonation, stress and pronunciation speed of said synthesized speech signal by said intonation pattern data, said stress pattern data, and said duration data from said rhythm generation means.

4. A speech synthesis system as claimed in claim 3, wherein said speech segment combination means (14) comprises:
speech unit selection means (16) for selecting initial demiphonemes and final demiphonemes corresponding to phonemes included in phonetic symbol data from said phonetic preprocessor means (10), generating addresses for storage regions of said demiphoneme storage means (18) having stored demiphoneme data for said selected initial demiphonemes and final demiphonemes, and supplying said addresses for said demiphoneme data to said demiphoneme storage means (18);
demiphoneme synthesis means (20) for synthesizing speech signal by decoding said demiphoneme data read out from said demiphoneme storage means (18), and adjusting intonation, stress and pronunciation speed of said synthesized speech signal by said intonation pattern data, said stress pattern data, and said duration data from said rhythm generation means; and
digital-to-analog conversion means (22) for converting synthesis speech data from said demiphoneme synthesis means (20) into analog synthesis speech signal.

5. A speech synthesis system as claimed in claim 4, wherein said speech unit selection means (16) comprises:
a shift register (38) for storing phonetic symbol data for odd phonemes from said phonetic preprocessor means;
a first memory (40) for storing a demiphoneme table according to a context between adjacent phonemes, and generating initial phoneme and final phoneme symbols for one phoneme according to context between adjacent phonemes by logic value of phonetic symbol data for said odd phonemes from said shift register (38); and
a second memory (42) for generating addresses for storage reaions of said demiphoneme storage means (18) where demiphoneme data for said initial demiphoneme and final demiphoneme symbols from said first memory (40) are stored, and supplying said generated address to said demiphoneme storage means (18).

6. A speech synthesis system as claimed in claim 5, wherein said shift register (38) comprises seven phoneme buffers (24,26,28,30,32,34,36) to reflect an influence from three preceding phonemes and three following phonemes.

7. A speech synthesis system as claimed in claim 5, wherein a demiphoneme table according to context is formed by collecting speech samples of each phoneme in case that preceding phoneme and following phoneme are converted according to phonotactic constraint, dividing said collected speech samples into initial demiphonemes and final demiphonemes, and classifying said initial demiphonemes and final demiphonemes according to similarity.

8. A speech synthesis system as claimed in claim 5, wherein said demiphoneme table according to context is formed by steps of:
classifying preceding and following vowels adjacent to the demiphoneme into a front, central, back, rounded and flat vowels;
sub-classifying the classified vowels into low and high vowels, if the demiphoneme is a vowel or a glide sound;
dividing preceding and following consonants adjacent to the demiphoneme into labial, dental, palatal, velar and glottal consonants;
sub-dividing the divided consonants accordingly as whether the demiphoneme is a lateral, a nasal, a plosive(or affrication), or frication(or an aspiration) noise; and
dividing the sub-divided consonants accordingly as whether the demiphoneme is a voiced plain, an unvoiced plain, a glottalized, or aspirated noise, in detail.

9. A speech synthesis system as claimed in claim 8, wherein said demiphoneme table according to context is formed so that:
the demiphoneme of the consonants and the nasal noise is not affected with the rounded and flattened noise;
the demiphoneme of the consonant and plosive noise is not affected with the front and back vowels;
the demiphoneme having a stop gap between the plosive and affricate is affected with the adjacented phoneme;
the demiphoneme of the consonant and aspiration is affected with the low and high vowels.

10. A speech recognition method using a recognizing pattern data extracted from demiphonemes as a basic recognition unit for recognizing speech, said demiphonemes being formed by bisecting a phoneme with respect to a stable interval of the phoneme being not affected with a preceding and following phonemes.

11. A speech recognition method as claimed in claim 10, wherein said recognizing pattern is formed by extracting characteristic parameters from speech samples for the demiphoneme and encoding the extracted characteristic parameters.

12. A speech recognition method as claimed in claim 10, wherein said recognizing pattern data includes characteristic parameters extracted from speech model which speech sample for the demiphoneme is modeled after.

13. A speech recognition system comprising:
analog-to-digital conversion means (43) for converting speech signal into digital signal;
characteristic extraction means (46) for extracting speech characteristic parameters from digital speech data supplied from said analog-to-digital conversion means (43);
demiphoneme data storage means (48) in which demiphoneme data having characteristic parameters are stored;
recognized word storage means (50) or storing a plurality of recognized words having addresses to be supplied to said demiphoneme data storage means (48), to read out character train data for word, phrase, and clause, and demiphoneme data for said character train; and
recognition means (52) for selecting a character train of recognized word having the highest approximate value by sequentially comparing said characteristic parameters supplied from said characteristic extraction means (46) with demiphoneme data supplied from said demiphoneme data storage means (48) for said plurality of recognized words stored in said recognized word storage means (50).

14. A speech recognition system as claimed in claim 13, wherein said demiphoneme data stored in said demiphoneme storage means (48) has characteristic parameters extracted from samples and reflecting an influence of preceding and following phonemes.

15. A speech recognition system as claimed in claim 14, wherein said characteristic parameter included in said demiphoneme data includes a short-term energy, a differenced short-term energy, an output energy of filter bank, and a reflection coefficient.

16. A speech recognition system as claimed in claim 14, wherein said recognized word storage part is replaced with a memory unit where new recognized words are stored, when a recognizing vocabulary is changed or increased.

17. A speech recognition system as claimed in claim 13, wherein the artificial neural net forming said demiphoneme data stored in said demiphoneme data storage means has a weight value generated by extracting characteristic parameter for demiphoneme and learning them.

18. A speech recognition system as claimed in claim 13, wherein said demiphoneme data stored in said demiphoneme data storage means has an occupation distribution and a state transition distribution value of speech spectrum obtained by Markov modelling.

## Patentansprüche

1. Sprachsyntheseverfahren, bei dem ein Halbphonem als eine Basisspracheinheit zum Synthetisieren von Sprache verwendet wird, wobei die Halbphoneme durch Zweiteilen eines Phonems bezüglich eines festen Intervalls von dem Phonem gebildet werden, das nicht durch ein vorhergehendes Phonem oder ein nachfolgendes Phonem beeinträchtigt wird.

2. Sprachsyntheseverfahren nach Anspruch 1, bei dem die Halbphoneme Übergangsbestandteile enthalten, die sich in einem Randbereich des Phonems benachbart zu dem vorhergehenden Phonem oder dem nachfolgenden Phonem befinden.

3. Sprachsynthesesystem, mit:
einer Phonetikvorprozessoreinrichtung (10) zum Erzeugen von Syntaxinformationsdaten durch Analysieren der Syntax von Schriftzeichenfolgedaten (11) von einem Wort, Wortverbindung und Satz und Umwandeln der Schriftzeichenfolgedaten in Phonetiksymboldaten durch eine Rhythmusvariationsregel gemäß den Syntaxinformationsdaten;
einer Rhythmuserzeugungseinrichtung (12) zum Erzeugen von Intonationsmusterdaten zum Anpassen einer Sprachintonation, von Betonungsmusterdaten zum Anpassen einer Sprachbetonung und von Zeitdauerdaten zum Anpassen einer Phonemzeitdauer entsprechend den Syntaxinformationsdaten von der Phonetikvorprozessoreinrichtung;
einer Halbphonemspeichereinrichtung (18) zum Speichern von Anfangs-Halbphonem- und End-Halbphonemdaten, wobei das Halbphonem durch Zweiteilen eines Phonems bezüglich einer Mitte von dem Phonem erzeugt wird, und Kodieren der zweigeteilten Halbphoneme; und
einer Sprachsegmentkombinationseinrichtung (14) zum Auslesen aus der Halbphonemspeichereinrichtung (18) von zumindest einem Anfangs-Halbphonem- und End-Halbphonemdatenelement entsprechend den Phonetiksymboldaten von der Phonetikvorprozessoreinrichtung (10), Synthetisieren eines Phonetiksignals durch Kodieren der ausgelesenen Anfangs-Halbphonemund End-Halbphonemdaten und Anpassen von Intonation, Betonung und Aussprachegeschwindigkeit des synthetisierten Sprachsignals durch die Intonationsmusterdaten, die Betonungsmusterdaten und die zeitdauerdaten von der Rhythmuserzeugungseinrichtung.

4. Sprachsynthesesystem nach Anspruch 3, bei dem die Sprachsegmentkombinationseinrichtung (14) aufweist:
eine Spracheinheitsselektionseinrichtung (16) zum Selektieren von Anfangs-Halbphonemen und End-Halbphonemen entsprechend den Phonemen, die in Phonetiksymboldaten von der Phonetikvorprozessoreinrichtung (10) enthalten sind, Erzeugen von Adressen für Speicherbereiche der Halbphonemspeichereinrichtung (18) mit gespeicherten Halbphonemdaten für die selektierten Anfangs-Halbphoneme und End-Halbphoneme und Liefern der Adressen für die Halbphonemdaten zu der Halbphonemspeichereinrichtung (18);
eine Halbphonemsyntheseeinrichtung (20) zum Synthetisieren von Sprachsignalen durch Dekodieren der Halbphonemdaten, die aus der Halbphonemspeichereinrichtung (18) ausgelesen sind, und Anpassen von Intonation, Betonung und Aussprachegeschwindigkeit der synthetisierten Sprachsignale durch die Intonationsmusterdaten, die Betonungsmusterdaten und die Zeitdauerdaten von der Rhythmuserzeugungseinrichtung; und
eine Digital-Analog-Wandlereinrichtung (22) zum Umwandeln von Synthesesprachdaten von der Halbphonemsyntheseeinrichtung (20) in analoge Synthesesprachsignale.

5. Sprachsynthesesystem nach Anspruch 4, bei dem die Spracheinheitsselektionseinrichtung (16) aufweist:
ein Schieberegister (38) zum Speichern von Phonetiksymboldaten für seltene Phoneme von der Phonetikvorprozessoreinrichtung;
einen ersten Speicher (40) zum Speichern einer Halbphonemtabelle entsprechend einem Kontext zwischen benachbarten Phonemen und Erzeugen von Anfangs-Phonem- und End-Phonemsymbolen für ein Phonem entsprechend dem Xontext zwischen benachbarten Phonemen durch Logikwerte von Phonetiksymboldaten für die seltenen Phoneme vom Schieberegister (38); und
einen zweiten Speicher (42) zum Erzeugen von Adressen für Speicherbereiche der Halbphonemspeichereinrichtung (18), wo Halbphonemdaten für die Anfangs-Halbphonem- und End-Halbphonemsymbole von dem ersten Speicher (40) gespeichert sind, und Liefern der erzeugten Adresse zu der Halbphonemspeichereinrichtung (18).

6. Sprachsynthesesystem nach Anspruch 5, bei dem das Schieberegister (38) sieben Phonempuffer (24, 26, 28, 30, 32, 34, 36) enthält, um einen Einfluß von drei vorhergehenden Phonemen und drei nachfolgenden Phonemen widerzuspiegeln.

7. Sprachsynthesesystem nach Anspruch 5, bei dem eine Halbphonemtabelle entsprechend einem Kontext durch Sammeln von Sprachproben von jedem Phonem in dem Fall gebildet wird, daß vorhergehende Phoneme und nachfolgende Phoneme gemäß phonotaktischer Beschränkung umgewandelt sind, Trennen der gesammelten Sprachproben in Anfangs-Halbphoneme und End-Halbphoneme und Klassifizieren der Anfangs-Halbphoneme und End-Halbphoneme entsprechend ihrer Ähnlichkeit.

8. Sprachsynthesesystem nach Anspruch 5, bei dem die Halbphonemtabelle entsprechend einem Kontext durch die Schritte gebildet ist:
Klassifizieren von vorhergehenden und nachfolgenden Vokalen benachbart zu dem Halbphonem in vordere, zentrale, hintere, gerundete und flache Vokale;
Unterklassifizieren der klassifizierten Vokale in tiefe und hohe Vokale, wenn das Halbphonem ein Vokal oder ein Gleitlaut ist;
Trennen von vorhergehenden und nachfolgenden Konsonanten benachbart zu dem Halbphonem in Labial-, Dental-, Gaumen-, Velar- und Kehlkopfverschluß-Konsonanten;
Unterteilen der getrennten Konsonanten abhängig davon, ob das Halbphonem ein Lateral-, Nasal-, Verschluß- (oder Affrikata) oder Reibe- (oder Hauch-) Laut ist; und
detailliertes Trennen der unterteilten Konsonanten abhängig davon, ob das Halbphonem eine stimmhafter Laut, ein stimmloser Laut, ein Kehlkopfverschluß- oder Hauch-Laut ist.

9. Sprachsynthesesystem nach Anspruch 8, bei dem die Halbphonemtabelle entsprechend dem Kontext so gebildet ist, daß:
das Halbphonem von den Konsonanten und dem Nasal-Laut nicht durch einen gerundeten oder abgeflachten Laut beeinträchtigt wird;
das Halbphonem von dem Konsonanten und dem Verschluß-Laut nicht durch vordere und hintere Vokale beeinträchtigt wird;
das Halbphonem mit einer Unterbrechungspause zwischen dem Spreng-Laut und dem Affrikata nicht durch das benachbarte Phonem beeinträchtigt wird;
das Halbphonem von dem Konsonanten und dem Hauch-Laut nicht durch tiefe und hohe Vokale beeinträchtigt wird.

10. Spracherkennungsverfahren, bei dem Erkennungsmusterdaten, die von Halbphonemen extrahiert werden, als eine Basiserkennungseinheit für die Erkennung von Sprache verwendet werden, wobei die Halbphoneme durch Zweiteilen eines Phonems bezüglich eines festen Intervalls von dem Phonem gebildet werden, das nicht durch ein vorhergehendes und nachfolgendes Phonem beeinträchtigt wird.

11. Spracherkennungsverfahren nach Anspruch 10, bei dem das Erkennungsmuster durch Extrahieren von charakteristischen Parametern aus Sprachproben für die Halbphoneme gebildet wird und die extrahierten charakteristischen Parameter kodiert werden.

12. Spracherkennungsverfahren nach Anspruch 10, bei dem die Erkennungsmusterdaten Charakteristikparameter enthalten, die von einem Sprachmodell extrahiert werden, wobei Sprachproben für das Halbphonem danach modelliert werden.

13. Spracherkennungssystem, mit:
einer Analog-Digital-Wandlereinrichtung (43) zum Umwandeln von Sprachsignalen in digitale Signale;
einer Charakteristikextraktionseinrichtung (46) zum Extrahieren von Sprachcharakteristikparametern aus digitalen Sprachdaten, die von der Analog-Digital-Wandlereinrichtung (43) geliefert werden;
einer Halbphonemdatenspeichereinrichtung (48), in der Halbphonemdaten mit Charakteristikparametern gespeichert sind;
einer Erkennungswortspeichereinrichtung (50) zum Speichern einer Vielzahl von erkannten Wörtern mit Adressen, die zu der Halbphonemspeichereinrichtung (48) zu liefern sind, um Schriftzeichenfolgedaten von einem Wort, Wortverbindung und Satz und Halbphonemdaten für die Schriftzeichenfolge auszulesen; und
einer Erkennungseinrichtung (52) zum Selektieren einer Schriftzeichenfolge von erkannten Wörtern mit dem höchsten Approximationswert durch aufeinanderfolgendes Vergleichen der Charakteristikparameter, die von der Charakteristikextraktionseinrichtung (46) geliefert werden, mit Halbphonemdaten, die von der Halbphonemdatenspeichereinrichtung (48) geliefert werden, für die Vielzahl von erkannten Wörtern, die in der Erkennungswortspeichereinrichtung (50) gespeichert sind.

14. Spracherkennungssystem nach Anspruch 13, bei dem die Halbphonemdaten, die in der Halbphonemspeichereinrichtung (48) gespeichert sind, Charakteristikparameter haben, die aus Proben extrahiert sind und einen Einfluß von vorhergehenden und nachfolgenden Phonemen widerspiegeln

15. Spracherkennungssystem nach Anspruch 14, bei dem der Charakteristikparameter, die in den Halbphonemdaten enthalten ist, eine Kurzzeitenergie, eine unterschiedliche Kurzzeitenergie, eine Ausgangsenergie einer Filtergruppe (filter bank) und einen Reflexionskoefizienten enthält.

16. Spracherkennungssystem nach Anspruch 14, bei dem der Erkennungswortspeicherbereich durch eine Speichereinheit ersetzt wird, wo neue erkannte Wörter gespeichert sind, wenn ein Erkennungsvokabular verändert oder erweitert wird.

17. Spracherkennungssystem nach Anspruch 13, bei dem das künstliche Neuronennetz, durch das die Halbphonemdaten gebildet werden, die in der Halbphonemdatenspeichereinrichtung gespeichert sind, einen Gewichtungswert hat, der erzeugt wird durch Extrahieren von Charakteristikparametern für Halbphoneme und durch Lernen von diesen.

18. Spracherkennungssystem nach Anspruch 13, bei dem die Halbphonemdaten, die in der Halbphonemdatenspeichereinrichtung gespeichert sind, eine Belegungsverteilungs- und einen Zustandsübergangsverteilungswert des Sprachspektrums hat, das durch Markov-Modellieren erhalten wird.

## Revendications

1. Procédé de synthèse de la parole utilisant un demi-phonème en tant qu'unité de parole de base pour la synthèse de la parole, lesdits demi-phonèmes étant formés par division en deux d'un phonème par rapport à un intervalle stable du phonème non affecté par un phonème précédent ni par un phonème suivant.

2. Procédé de synthèse de la parole selon la revendication 1, selon lequel lesdits demi-phonèmes comprennent des composantes de transition qui existent dans une zone marginale du phonème adjacente au phonème précédent ou au phonème suivant.

3. Système de synthèse de la parole comprenant :
des moyens formant préprocesseur phonétique (10) pour produire des données d'information de syntaxe par analyse d'une syntaxe de données (il) d'une suite de caractères dans un mot, une phrase et un membre de phrase, et convertir lesdites données de la suite de caractères en des données de symboles phonétiques au moyen d'une règle de variation de rythme conformément auxdites données d'information de syntaxe ;
des moyens (12) de production de rythme servant à produire des données de forme d'intonation pour ajuster une intonation de la parole, des données de forme de stress pour ajuster un stress de la parole et des données de durée pour ajuster une durée de phonème, en fonction desdites données d'information de syntaxe provenant desdits moyens formant processeur phonétique ;
des moyens (18) de mémorisation de demi-phonèmes pour mémoriser des données d'un demi-phonème initial et d'un demi-phonème final, lesdits demi-phonèmes étant produits par subdivision en deux d'un phonème par rapport à un centre du phonème et par codage des demi-phonèmes obtenus par division ; et
des moyens (14) de combinaison de segments de parole pour lire à partir desdits moyens (18) de mémoire des demi-phonèmes, des données d'au moins un demi-phonème initial et d'un demi-phonème final correspondant auxdites données de symboles phonétiques à partir desdits moyens (10) formant préprocesseur phonétique, synthétiser un signal phonétique par codage desdites données lues du demi-phonème et du demi-phonème final, et ajuster l'intonation, le stress et la vitesse de prononciation dudit signal vocal synthétisé au moyen desdites données de forme d'intonation, lesdites données de forme de stress et lesdites données de durée provenant desdits moyens de production de rythme.

4. Système de synthèse de la parole selon la revendication 3, dans lequel lesdits moyens (14) de combinaison de segment de parole comprennent :
des moyens (16) de sélection d'unités de parole pour sélectionner lesdits phonèmes initiaux et lesdits phonèmes finals correspondant à des phonèmes contenus dans des données de symboles phonétiques provenant desdits moyens (10) formant préprocesseur phonétique, produire des adresses pour des zones de mémoire desdits moyens (18) de mémoire de demi-phonèmes contenant des données mémorisées de demi-phonèmes pour lesdits demi-phonèmes initiaux sélectionnés et lesdits demi-phonèmes finals sélectionnés, et envoyer lesdites adresses pour lesdites données de demi-phonèmes auxdites moyens (18) de mémoire de demi-phonèmes ;
des moyens (20) de synthèse de demi-phonèmes pour synthétiser un signal vocal par décodage desdites données de demi-phonèmes, lues à partir desdits moyens (18) de mémoire de demi-phonèmes, et ajuster l'intonation, le stress et la vitesse de prononciation dudit signal de parole synthétisé, au moyen desdites données de forme d'intonation, desdites données de forme de stress et desdites données de durée délivrées par lesdits moyens de production de rythme ; et
des moyens (22) de conversion numérique/analogique pour convertir des données de parole de synthèse à partir desdits moyens (20) de synthèse de demi-phonèmes en ledit signal de parole de synthèse analogique.

5. Système de synthèse de parole selon la revendication 4, dans lequel desdits moyens (16) de sélection d'unités de parole comprennent :
un registre à décalage (38) pour mémoriser des données de symboles phonétiques pour des phonèmes impairs provenant desdits moyens formant processeur phonétique ;
une première mémoire (40) pour mémoriser une table de demi-phonèmes conformément à un contexte entre des phonèmes adjacents, et produire des symboles de phonème initial et de phonème final pour un phonème conformément au contexte entre des phonèmes adjacents, par une valeur logique des données de symboles phonétiques pour lesdits phonèmes impairs provenant dudit registre à décalage (38) ; et
une seconde mémoire (42) pour produire des adresses pour des régions de mémoire desdits moyens de mémoire de demi-phonèmes (18), dans lesquels des données de demi-phonèmes pour lesdits symboles du demi-phonème initial et du demi-phonème final provenant de ladite première mémoire (40) sont mémorisées, et envoyer ladite adresse produite auxdits moyens (18) de mémoire de demi-phonèmes.

6. Système de synthèse de la parole selon la revendication 5, dans lequel ledit registre à décalage (38) comprend sept tampons de phonèmes (24, 26, 28, 30, 32, 34, 36) pour reproduire une influence à partir de trois phonèmes précédents et de trois phonèmes suivants.

7. Système de synthèse de la parole selon la revendication 5, dans lequel une table de demi-phonèmes conformément au contexte est formée par collecte d'échantillons de parole de chaque phonème dans le cas où le phonème précédent et le phonème suivant sont convertis conformément à une contrainte phonotactique, par division desdits échantillons de parole collectés dans des demi-phonèmes initiaux et dans des demi-phonèmes finals, et le classement desdits demi-phonèmes initiaux et desdits demi-phonèmes finals en fonction d'une similitude.

8. Système de synthèse de la parole selon la revendication 5, dans lequel ladite table de demi-phonèmes conformément au contexte est formée au moyen des étapes consistant à :
classer des voyelles précédentes et suivantes adjacentes au demi-phonème en des voyelles avant, centrale, arrière, arrondie et bémolisée ;
classer secondairement les voyelles classées en des voyelles basses et aiguës, si le demi-phonème est une voyelle ou un son sifflant ;
diviser des consonnes précédente et suivante adjacentes au demi-phonème en des consonantes labiale, dentale, palatale, vélaire et glottale ;
diviser secondairement les consonnes divisées en fonction du fait que le demi-phonème est un bruit latéral, un bruit nasal, un bruit de plosive (ou d'affriquée) ou un bruit de fricative (ou une aspiration) ; et
diviser de façon détaillée des consonnes divisées secondairement en fonction du fait que le demi-phonème est un bruit ordinaire voisé, un bruit ordinaire non voisé, un bruit rendu glottal ou un bruit aspiré.

9. Système de synthèse de la parole selon la revendication 8, dans lequel ladite table de demi-phonèmes conformément au contexte est formé de telle sorte que :
le demi-phonème des consonnes et du bruit nasal n'est pas affecté par le bruit arrondi et bémolisé ;
le demi-phonème de la consonne et de bruit de plosive n'est pas affecté par les voyelles avant et arrière ;
le demi-phonème présentant un intervalle d'arrêt entre la plosive et l'affriquée est affecté par le phonème adjacent ;
le demi-phonème de la consonne et de l'aspiration est affecté par les voyelles basses et aiguës.

10. Procédé de reconnaissance de la parole utilisant des données de forme de reconnaissance extraites de demi-phonèmes en tant qu'unité de reconnaissance de base pour la reconnaissance de la parole, lesdits demi-phonèmes étant formés par division d'un phonème par rapport à un intervalle stable du phonème non affecté par des phonèmes précédent et suivant.

11. Procédé de reconnaissance de la parole selon la revendication 10, selon lequel ladite forme de reconnaissance est formée par extraction de paramètres caractéristiques à partir d'échantillons de parole pour le demi-phonème et codage des paramètres caractéristiques extraits.

12. Procédé de reconnaissance de la parole selon la revendication 10, selon lequel lesdites données de forme de reconnaissance comprennent des paramètres caractéristiques extraits du modèle de parole, ledit échantillon de parole pour le demi-phonème étant modélisé ultérieurement.

13. Procédé de reconnaissance de la parole comprenant :
des moyens de conversion analogique/numérique (43) pour convertir le signal de parole en un signal numérique ;
des moyens (46) d'extraction de caractéristiques pour extraire les paramètres caractéristiques de la parole à partir de données de parole numériques délivrées par lesdits moyens de conversion analogique/numérique (43 ) ;
des moyens (48) de mémorisation de demi-phonèmes, dans lesquels les données de demi-phonèmes comportant des paramètres caractéristiques sont mémorisés ;
des moyens (50) de mémorisation de mots identifiés pour mémoriser une pluralité de mots identifiés comportant des adresses devant être envoyées auxdits moyens (48) de mémorisation de données de demi-phonèmes, pour lire des données de suites de caractères pour un mot, une phrase et une partie de phrase, et des données de demi-phonèmes pour ladite suite de caractères ; et
des moyens d'identification (52) pour sélectionner une suite de caractères d'un mot identifié possédant la valeur approximée la plus élevée par comparaison séquentielle desdits paramètres caractéristiques délivrés par lesdits moyens (46) d'extraction de caractéristiques à des données de demi-phonèmes délivrées par lesdits moyens (48) de mémoire de données de demi-phonèmes pour la pluralité de mots identifiés, mémorisés dans lesdits moyens (50) de mémoire de mots identifiés.

14. Système de reconnaissance de la parole selon la revendication 13, dans lequel lesdites données de demi-phonèmes sont mémorisées dans lesdits moyens (46) de mémoire de demi-phonèmes, possèdent des paramètres caractéristiques extraits d'échantillons et reproduisant une influence de phonèmes précédent et suivant.

15. Système de reconnaissance de la parole selon la revendication 14, dans lequel ledit paramètre caractéristique contenu dans lesdits données de demi-phonèmes inclut une énergie à court terme, une énergie à court terme différenciée, une énergie de sortie d'un bloc de filtres et un coefficient de réflexion.

16. Système de reconnaissance de la parole selon la revendication 14, dans lequel ladite partie de mémorisation de mots identifiés est remplacée par une unité de mémoire, dans laquelle de nouveaux mots identifiés sont mémorisés, lorsqu'un vocabulaire d'identification est modifié ou accru.

17. Système de reconnaissance de la parole selon la revendication 13, dans lequel le réseau neuronal artificiel formant lesdites données de demi-phonèmes mémorisées dans lesdits moyens de mémoire de données de demi-phonèmes possède une valeur de poids produite par extraction d'un paramètre caractéristique pour un demi-phonème et apprentissage de ce paramètre.

18. Système de reconnaissance de la parole selon la revendication 13, dans lequel lesdites données de demi-phonèmes mémorisées dans lesdits moyens de mémoire de données de demi-phonèmes possèdent une distribution d'occupation et une valeur de distribution de transitions d'état du spectre de la parole obtenu par modélisation de Markov.
